# EUROPEAN PATENT SPECIFICATION

(11) **EP 4 455 626 B1**
(45) Date of publication and mention of the grant of the patent: **11.11.2026**
(21) Application number: 23170117.8
(22) Date of filing: 26.04.2023
(51) Int. Cl.: G01K 1/02, G01K 1/08, G01K 1/143, G01K 1/18, G01K 13/02

(54) **TEMPERATURE SENSOR ASSEMBLY**
TEMPERATURSENSORANORDNUNG
ENSEMBLE CAPTEUR DE TEMPÉRATURE

(43) Date of publication of application: 30.10.2024
(73) Proprietor: ABB SCHWEIZ AG, 5400 Baden (CH)
(72) Inventor: GEBHARDT, Joerg, 55130 Mainz (DE); DAAKE, Wilhelm, 32469 Petershagen (DE); SCHROEDER, Karsten, 32469 Petershagen (DE); SOSALE, Guruprasad, 80997 München (DE); ACKERMANN, Patric, 64405 Fischbachtal (DE); DASGUPTA, Subhashish, 560066 Bangalore (IN)
(74) Representative: Maiwald GmbH

(56) References cited:
- EP-A1- 4 130 694
- DE-A1- 102021 209 278

## Description

### FIELD OF THE INVENTION

The present invention relates to a temperature sensor assembly configured to determine a temperature of a surface of a vessel wall, in particular for use in industrial processes.

### BACKGROUND OF THE INVENTION

Determination of temperatures is vital for safe running of facilities, as being one of the main control parameters for process control. Ensuring that temperature measurements of process media are accurate and repeatable is critical. For determination of a temperature of a medium within a vessel and/or of the vessel wall, surface temperature sensors are placed at a surface of a wall of the vessel in order to measure the temperature of this surface, and respectively determine the temperature of the medium at the other side of the wall. Such devices are known for example from DE102021209278A1, WO2019063519A1, WO2020035260A1, EP4063815A1 and EP4130694A1. The surface temperature sensors must be fixed or pressed to the surface in a very reliable and reproducible manner. This is relevant to create a definite thermal contact between wall surface and a thermometer rod or thermal rod, and to have a definite situation for temperature measurement.

It has now become apparent, that there is a need to provide further means for reliable temperature measurements in industrial processes.

In view of the above, it is an object of the present invention to provide a temperature sensor assembly. It is further an object of the present invention to provide a system with such a temperature sensor assembly.

These and other objects, which become apparent upon reading the following description, are solved by the subject matter of the independent claims. The dependent claims refer to preferred embodiments of the invention.

### SUMMARY OF THE INVENTION

An aspect of the present invention relates to a temperature sensor assembly configured to determine a temperature of a surface of a vessel wall, comprising:
a housing and a head element, wherein the head element is removably arranged on the housing. A first thermal rod, comprising a temperature measurement sensor; and
a second thermal rod, comprising a reference temperature sensor; wherein the first thermal rod and the second thermal rod are connected to the head element, such that the first thermal rod and/or the second thermal rod are removable from the housing with the head element, wherein the first thermal rod and the second thermal rod are connected to the housing through a force fitting, and a force-fitted structure is given by a bent rod structure, either of the first rod and/or of the second rod.

The term "removably" here and in the following means non-destructively, i.e. without damaging any parts, and reversibly, i.e. the part, here the head element, can be put in place again afterwards and is then essentially in the same state as before the removal. Typical options to realize this are thread-type connections, clamps, force fitting. For example, the head element may be removed by loosening a screw joint or a hook, thereby releasing a spring which is pressing the first thermal rod and/or the second thermal rod onto a thermal contact area to make contact to the surface of the vessel wall. Other embodiments, which accomplish the described feature, may also be possible.

The housing may be connected to the surface of the vessel wall. The housing is connected, pressed and/or attached to the surface, which temperature shall be measured. The housing may be designed as a neck tube. The neck tube may be connected to the vessel wall by an adapter, for example a clamp.

The first and second thermal rod may e.g. contain sensing elements such as resistive temperature sensors or thermo-couple structures. Additionally, the first and second thermal rod may contain the conductors or wires to operate these sensor elements, together with means to electrically insulate these conductors against each other. Well-known mineral insulated stainless-steel - or copper-clad cables can be embodiments of such a thermal rods, which are well-known to a person skilled in the art.

The temperature sensor assembly according to the present invention is configured to be used with a surface of a vessel wall. A vessel may be a tube or a tank or a similar object which is designed to contain/carry a fluid. The term "fluid" includes liquid as well as gaseous substances.

The first thermal rod and the second thermal rod may also be described as thermometer rods. Both thermal rods may be essentially identical in construction. Alternatively, the rods may also be different.

The first thermal rod comprises the temperature measurement sensor to measure a temperature of the surface of the vessel wall or a temperature close to the surface of the vessel wall. The temperature measurement sensor may also be described as main temperature measurement sensor or contact temperature measurement sensor. The measured temperature may therefore be described as main temperature or contact temperature.

The second thermal rod comprises the reference temperature sensor to measure a reference temperature, e.g. in a small or a larger distance from the surface. The measured reference temperature can be used together with the main temperature of the temperature measurement sensor of the first thermal rod, to estimate the surface temperature of the vessel wall. If the surface temperature of the vessel wall is known, it may be used to determine the temperature inside the vessel.

The head element serves as a closure or cover for the housing. Furthermore, the head element may comprise the electronics for evaluating or analysing the measured values of the sensors, e.g. an analysing device, in the first and second thermal rods. A further housing structure configured to house the electronics of the assembly may also be remotely connected to the assembly, in particular the head element.

The first thermal rod and second thermal rod are both connected to the head element. The first and second thermal rod are not fixated inside the housing. The first and second rod element are held in place inside the housing by a force fitting. This may be done by some clamping of the rods themselves inside the housing, or by clamping a coupling element, for example a pinhole plate, inside the housing, which, in turn, can have a form fitted, force-fitted, or welded connection to the first thermal rod and/or second thermal rod.

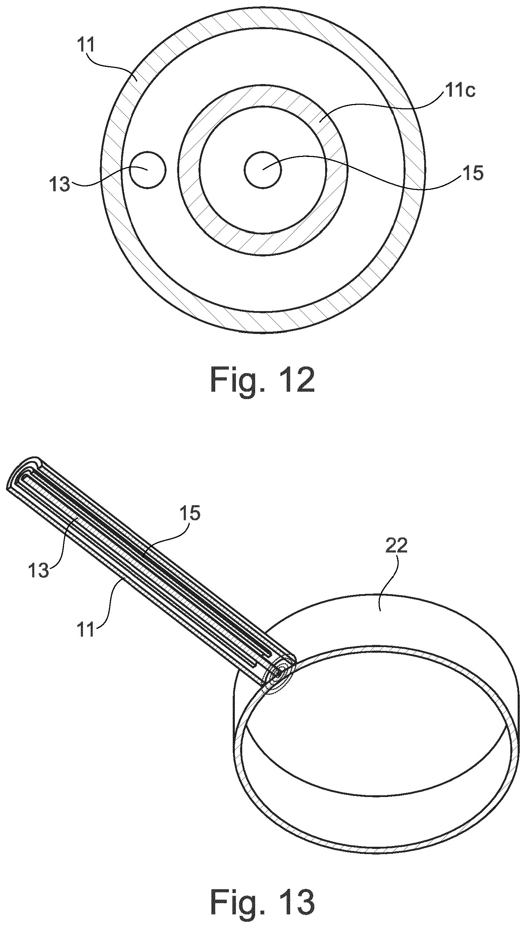

The force-fitted structure is given by a slightly bent rod structure, either of the first rod and/or of the second rod. An embodiment of such a structure is shown in Figure 13

The first thermal rod and the second thermal rod are configured to be removed from the housing, when the head element is removed. Particularly beneficial is a removal which is possible in a non-destructive and reversible way.

In an embodiment, the first thermal rod and/or the second thermal rod, or a mechanical ensemble which contains both, is connected to the housing through a force fitting.

In an embodiment, the housing and the head element are connected by a force-fitting and/or form-fitting, in particular by a threading. Other connections may be possible, for example a bayonet lock. This allows to securely connect the head element to the housing.

In an embodiment, the temperature assembly is configured to be connected to the vessel wall by a connection element, in particular by a clamping means. Preferably, the housing is connected via the connection element. The connection element may also comprise an adapter element or a receptacle to connect the housing to the connection element.

In an embodiment, a filling material, e.g. an insulating material, is at least partially arranged inside of the housing. In an embodiment, it is possible to use air or another gas as filling material.

In an embodiment, a coupling element, in particular a pinhole plate, is arranged to the first thermal rod and/or the second thermal rod. The coupling element allows to keep the first and second thermal rods thermally decoupled and at a defined spatial space. The coupling element also allows to fasten the first and second thermal rods by a force fitting inside the housing. More precisely the coupling element holds the first and/or second thermal rod in position. The coupling element does not inhibit a removal of the rods from the housing.

The internal cross section of the housing is nowhere smaller than the cross section of the first thermal rod and/or the second thermal rod or the coupling element, for example a pinhole plate. The said structures can simply pass every cross section of the housing during removal. In other words, the inner cross section of the housing is larger, than the cross section of the coupling element.

In order to have the coupling element, in particular a pinhole fixed: It may also be oval or of elliptic shape and could be rotated to give a form fitted fixation. The coupling element, e.g. the pinhole plate, is configured to fit through every cross section of the housing.

In an embodiment, the first thermal rod extends essentially along a middle axis of the housing.

In an embodiment, the second thermal rod extends at least partially parallel to the first thermal rod.

In an embodiment, the first thermal rod/ and/or the second thermal rod is at least in sections. This helps to ensure thermal decoupling of the two thermal rods. The bent structure helps to force fit the thermal rods inside the housing, for example with the help of a coupling element. More specifically, the coupling element may be pressed against an inner surface of the vessel wall because of the bent shape of the first and/or second thermal rod.

In an embodiment, the first thermal rod and/or the second thermal rod are/is pressed to the surface of the vessel by a spring element. The spring elements provide spring-loaded mechanical contacts of the thermal rods. This allows a constant contact pressure of the thermal rods, even when reassembling during maintenance. The spring element may comprise an elastic material, for example an elastomer, or a mechanical spring, for example a coil spring. Other suitable materials or components are possible.

In an embodiment, the first thermal rod and/or the second thermal rod comprises a hollow cylindrical shape, wherein the first thermal rod and the second thermal rod are arranged coaxial to each other. In other words, one thermal rod extend coaxially inside the other respective thermal rod.

In an embodiment, the first thermal rod is arranged in a first housing with a first head element and the second thermal rod is arranged in a second housing with a second head element. The first housing could also be enclosed by the other (e.g. essentially concentrically or eccentrically)

Another embodiment relates to a system for determining a temperature of a surface of a vessel wall, comprising: a temperature sensor assembly according to any of preceding embodiments; and an analysing device, for determining the surface temperature of the vessel wall, wherein the temperature sensor assembly is electrically connected to the analysing device; and a connection element configured to connect the temperature sensor assembly to the vessel wall, wherein the temperature sensor assembly is removable connected to the connection element by an adapter element.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. The drawings display:
- **Figure 1**: a schematic drawing of a temperature sensor assembly;
- **Figure 2**: a schematic drawing of a another temperature sensor assembly;
- **Figure 3**: a schematic drawing of a another temperature sensor assembly;
- **Figure 4**: a schematic drawing of a another temperature sensor assembly;
- **Figure 5**: a schematic drawing of another temperature sensor assembly;
- **Figure 6**: a schematic drawing of another temperature sensor assembly;
- **Figure 7**: a schematic drawing of a temperature sensor assembly configured inside of a neck tube;
- **Figure 8**: a schematic drawing of a temperature sensor assembly with a spring element;
- **Figure 9**: a schematic drawing of a temperature sensor assembly configured with two neck tubes;
- **Figure 10**: a schematic drawing of a temperature sensor assembly attached to a pipe/tank perimeter;
- **Figure 11**: a schematic drawing of an embodiment of one or more rods in an internal housing;
- **Figure 12**: another schematic drawing of the embodiment shown in Figure 11;
- **Figure 13**: a schematic drawing of an embodiment with a hollow cylindrical thermal rod;
- **Figure 14**: a schematic drawing of another embodiment with a hollow cylindrical rod; and
- **Figure 15**: a schematic drawing of an assembly of rods which contains one or more bent rods which lead to a certain clamping stress inside the housing after mounting.

### DESCRIPTION OF THE EMBODIMENTS

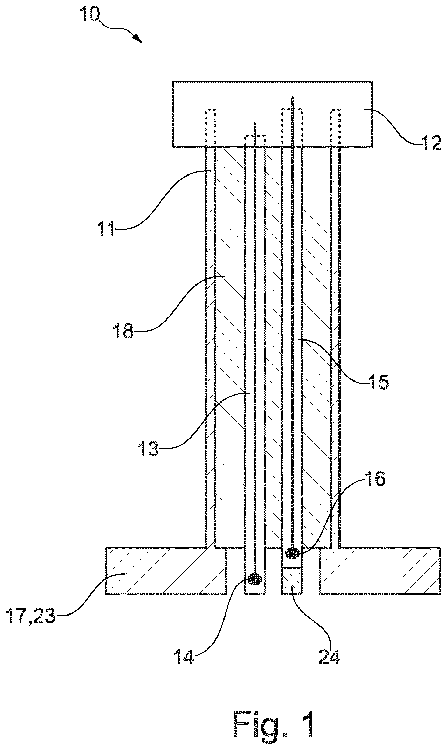

Figure 1 illustrates schematically a temperature sensor assembly 10 comprising a housing 11. At an axial end of the housing 11, a head element 12 is arranged. More precisely, the head element 12 is removable arranged or connected to the housing 11.

The housing 11 may comprise a cylindrical shape or geometry. The housing 11 may also be described as neck tube. Alternatively, other shapes may be possible. The housing 11 is filled with a filling material 18, in particular an insulating material 18 or gas, for example air. Other gases and/or materials may be possible.

The head element 12 comprises a first thermal rod 13 and a second thermal rod 15. In other words, the first and second thermal rods 13, 15 are connected to the head element 12 with an axial end. The first thermal rod 13 and the second thermal rod 15 are fixed to the head element 12, such that, in an assembled state, the first and second thermal rods 13,15 both extend inside the housing 11. More precisely, in an assembled state, the two thermal rods 13, 15 are completely surrounded by the housing 11. The first and second thermal rods 13, 15 are thermally decoupled from each other. The first thermal rod 13 and the second thermal rod 15 extend parallel to each other.

The first thermal rod 13 and the second thermal rod 15 are connected to the head element 12. When the head element 12 is removed from the housing 11, the first thermal rod 13 and the second thermal rod 15 are also removed from the housing 11. The first and second thermal rods 13, 15 may be removed from the housing 11 with the insulating material 18 or without the insulating material 18.

The first thermal rod 13 and/or the second thermal rod 15 may be loosely held in place inside the housing 11 by the insulating material or other guiding elements.

The first thermal rod 13 comprises a temperature measurement sensor 14. The temperature measurement sensor 14 is arranged in the area of the free end of the first thermal rod 13. The free end of the first thermal rod 13 is in contact with the surface of vessel wall 22.

The second thermal rod 15 comprises a reference temperature sensor 16. The reference temperature sensor 16 is arranged in the area of the free end of the second thermal rod 15. The second thermal rod 15 is not in contact with the vessel wall 22. The second thermal rod 22 comprises a tip element 24. The tip element 24 allows for a different thermal conductivity or thermal resistance between the reference temperature sensor 16 and the vessel wall 22 and the first thermal rod 13 and the vessel wall 22.

The head element 12 may comprise electronic components for analysing or processing temperature data of the temperature sensors in the first thermal rod 13 and the second thermal rod 15, e.g. the head element 12 may comprise an analysing device.

The housing 11 is connected to the vessel wall 22 by an adapter element 23. The adapter element 23 may be arranged at the vessel wall 22 by a clamp element or a similar structure. The adapter element 23 is configured to hold the housing 11 such that the head element 12 with the first thermal rod 13 and the second thermal rod 15 can be removed without removing the housing 11 and/or the adapter element 23.

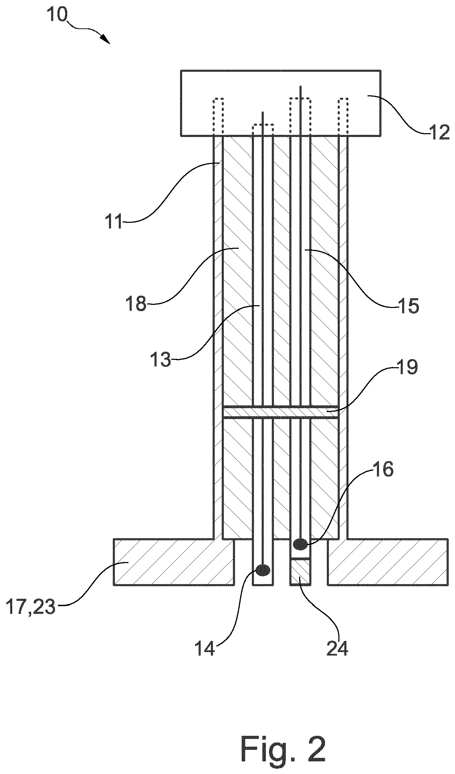

Figure 2 illustrates another temperature sensor assembly 10. The temperature sensor assembly 10 is similar to the one as shown in Figure 1, but with the difference that a coupling element 19 is arranged at the first thermal rod 13 and the second thermal rod 15. It is possible, that only the first and/or the second thermal rod 13, 15 are connected to the coupling element 19. The coupling element 19 allows to keep the first and second thermal rods 13, 15 thermally decoupled. The coupling element 19 also allows to fasten the first and second thermal rods 13, 15 by a force fitting inside the housing 11. The coupling element 19 may be designed as a pinhole plate 19. Other forms or designs may also be used.

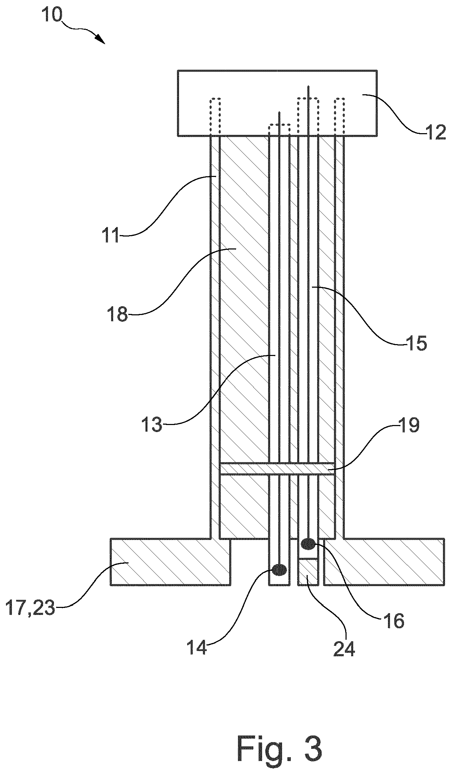

Figure 3 illustrates another temperature sensor assembly 10. The temperature sensor assembly 10 is similar to the one as shown in Figure 2. The first thermal rod 13 extends along a centre longitudinal axis of the housing 11. The second thermal rod 15 is arranged eccentric, next to the first thermal rod 13.

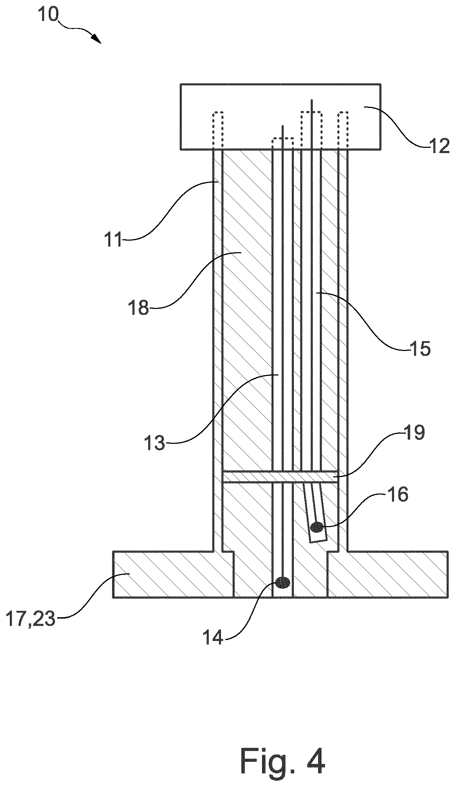

Figure 4 illustrates another temperature sensor assembly 10. The temperature sensor assembly 10 is similar to the one as shown in Figure 3, but with the difference, that the free end of the second thermal rod 15 comprises a bent or a curvature away from the first thermal rod 13. This is an advantage in terms of thermal decoupling.

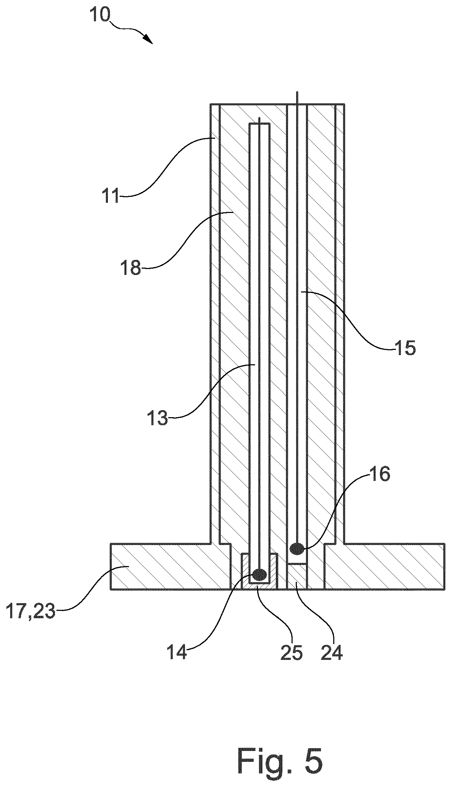

Figure 5 illustrates another temperature sensor assembly 10. The temperature sensor assembly 10 is similar to the one as shown in Figure 2, but with the difference, that the tip or axial end of the first thermal rod 13 comprises a cap element 25 comprising highly thermal conducting material for improving the thermal coupling between the temperature measurement sensor 14 of the first thermal rod 13 and the surface of the vessel wall 22.

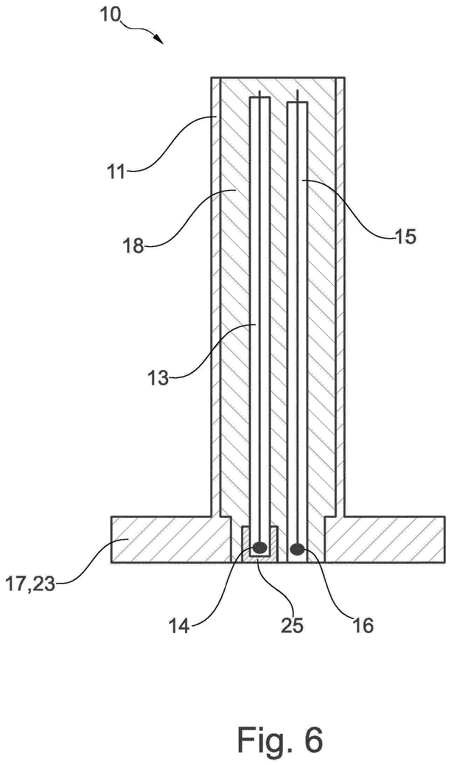

Figure 6 illustrates a further temperature sensor assembly 10. The temperature sensor assembly 10 is similar to the one shown in Figure 5, but the tip or the free axial end of the second thermal rod 15 is directly thermally coupled to the surface of the vessel wall 22. The first thermal rod 13 comprises the cap element 25. The cap element 25 has a different thermal conductivity and is beneficial for the thermal decoupling of the second thermal rod 15 from the vessel wall 22. The cap element 25 may have a high thermal conductivity for improving the temperature measurement by decreasing the thermal resistance between the surface of the vessel wall 22 and the temperature sensor.

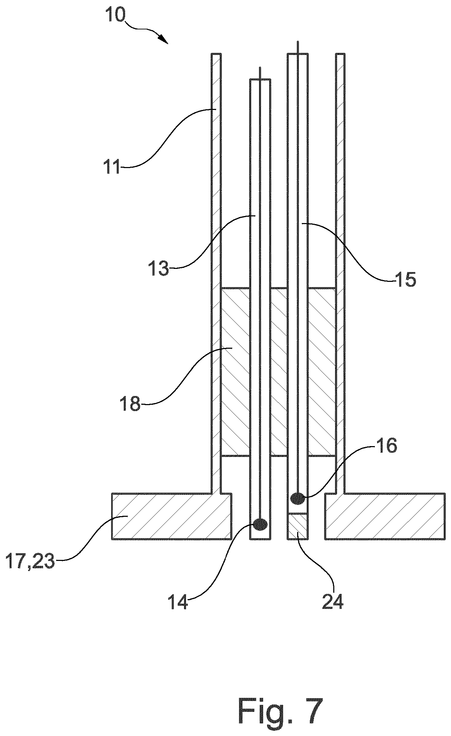

Figure 7 illustrates a further temperature sensor assembly 10 similar to the temperature sensor assembly 10 as shown in Figure 1, but wherein the housing 11 is filled only partially with an insulating material 18. The insulating material 18 may be used to fix the position of the first and second thermal rods 13, 15. This means, the insulating material 18 may be fixed to the housing 11, but not to the two thermal rods 13, 15. The housing 11 is at least partially filled with air. Preferably, the housing 11 is filled with a material whose thermal conductivity is at most a factor of 2 greater than that of air.

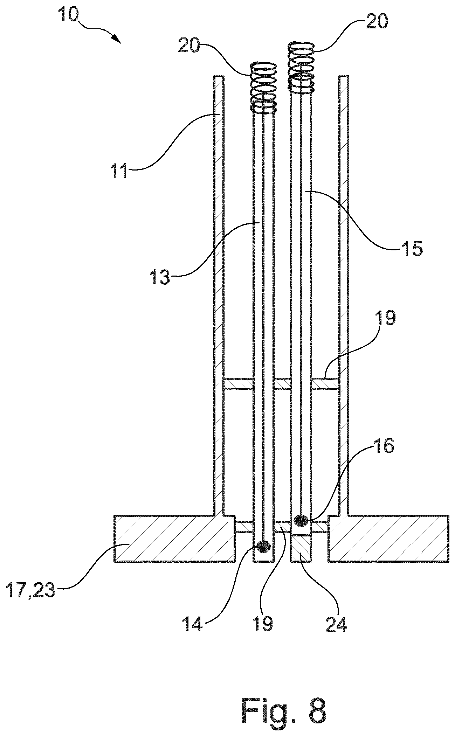

Figure 8 illustrates another temperature sensor assembly 200 similar to the temperature sensor assembly 10 as shown in figure 7, but without the insulating material. To mechanically fix the first and second thermal rod 13, 15 within the housing 11, two coupling elements 19 are provided, which are only weakly thermally conductive. The coupling elements 19 are not connected to the first and second thermal rods 13, 15. The first and second thermal rods 13, 15 are guided through respective holes of the coupling element 19 without being fixed/fastened to the coupling element 19. Additionally, the first and the second thermal rods 13, 15, which may be formed as standard thermometer rods, are coupled to the surface of the vessel wall 22 mechanically by a spring elements 20 to provide spring-loaded mechanical contacts.

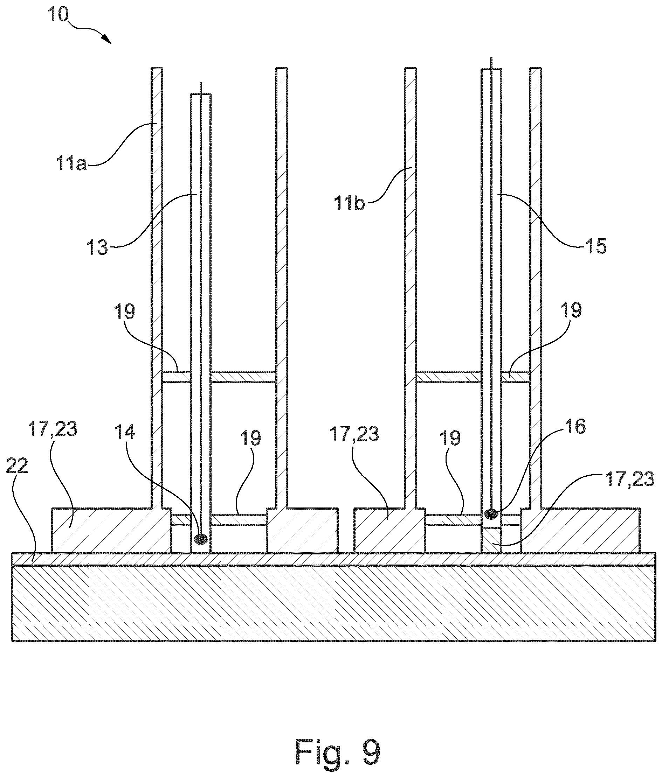

Figure 9 illustrates another temperature sensor assembly 10, wherein the first thermal rod 13 is arranged within a first housing 11a and the second thermal rod 15 is arranged within a second housing 11b. The thermal coupling of the first thermal rod 13 and the thermal coupling of the second thermal rod 15 are each configured as shown in Figure 1.

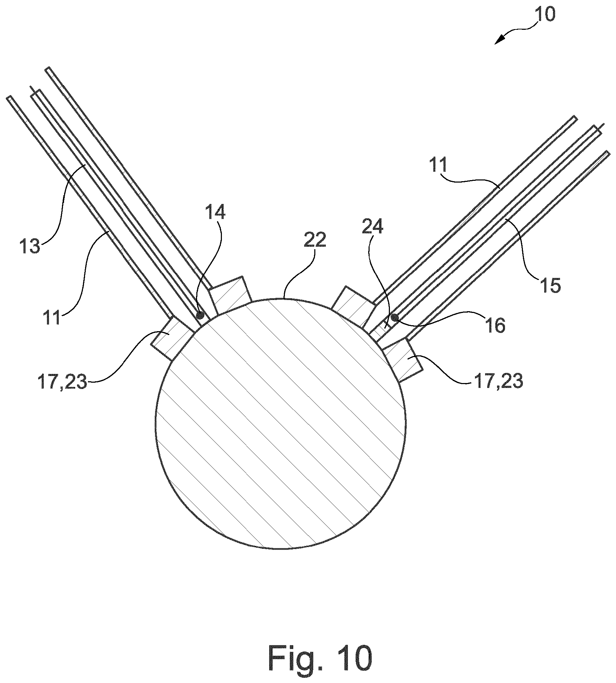

Figure 10 illustrates how the temperature sensor assembly 10 as shown in Figure 9 may be arranged on a curved surface of the vessel wall 22.

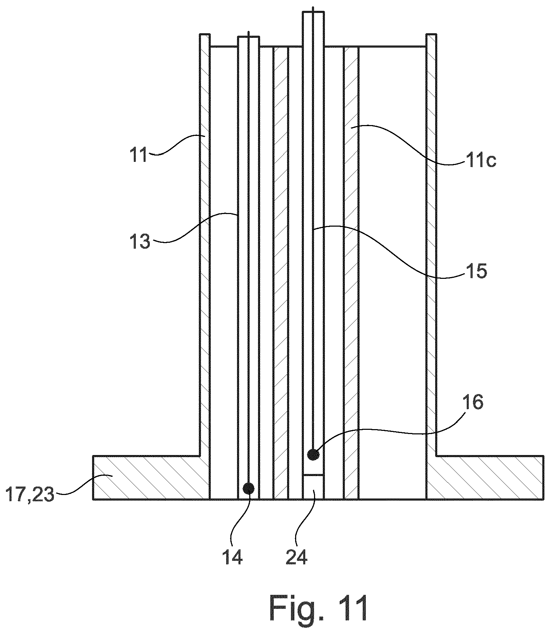

Figure 11 and Figure 12 illustrate an embodiment wherein the first thermal rod 13 and the second thermal rod 15 are arranged in two housings. Inside the housing 11, an inner housing 11c is arranged. The housing 11 and the inner housing 11c are concentrically to each other. The second thermal rod 15 is arranged in the inner housing 11c. The first thermal rod 13 is arranged in an annular gap between the inner housing 11c and the housing 11. More precisely, the first thermal rod 13 is arranged eccentrically from the second thermal rod 15.

In other words, the housing 11 may contain this internal or inner housing 11c with the first and second thermal rods, and possibly one or more other rods. The internal or inner housing 11c may be assembled concentrically to the external housing. The internal or inner housing 11c may be in mechanical contact to the surface of the vessel wall 22, whose temperature is to be measured, or not.

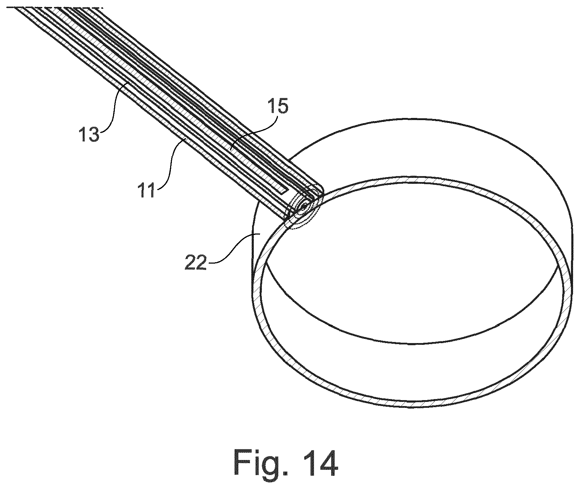

Figure 13 and Figure 14 illustrates further embodiments. In Figure 13 the second thermal rod 15 has a hollow cylindrical geometry, wherein the first thermal rod 13 is arranged concentrically inside the second thermal rod 15. The first thermal rod 13 is in contact with a surface of the vessel wall 22. The second thermal rod 15 is distanced from the vessel wall 22.

Figure 14 illustrates the reverse case of Figure 13. In Figure 14, the first thermal rod 13 comprises a hollow cylindrical geometry and the second thermal rod 15 is arranged coaxial inside the first thermal rod 13. The first thermal rod 13 is in contact with a surface of the vessel wall 22. The second thermal rod 15 inside the first thermal rod 13 is distanced to the vessel wall 22.

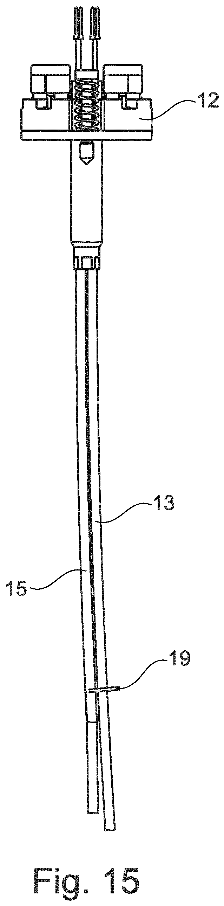

Figure 15 illustrates an embodiment, wherein the first thermal rod 13 is bent away from the second thermal rod 15. To put it another way, the first thermal rod 13 and the second thermal rod 15 do not extend along an axis parallel to a longitudinal axis of the housing 11 (the housing is not shown in Figure 15).

In an assembled state, the first thermal rod 13 and second thermal rod 15 are bent or inclined towards an inner surface of the housing 11. The bent and inclined features allow to create a tension against the housing 11. More precisely, the coupling element 19, which is connected to one or both thermal rods 13, 15 is pressed against an inner surface of the housing 11. This allows to fix the first thermal rod 13 and/or the second thermal rod 15 inside the housing 11 by a force fit. When the head element 12 is removed from the housing 11, the thermal rods 13, 15 are removed with the head element 12. The coupling element 19 is also removed with the thermal rods 13, 15, when the head element 12 is removed. The head element 12 and the first and second thermal rod 13, 15 with the coupling element 19 can be inserted back into the housing 11 and connected or fastend to it.

In the claims, the word "comprising" does not exclude other elements or steps and the indefinite article "a" or "an" does not exclude a plurality. A single processor or other unit may fulfill the functions of several items or steps recited in the claims. Any reference signs in the claims should not be construed as limiting the scope of the claims.

### References

- 10: temperature sensor assembly
- 11: housing
- 11a: first housing
- 11b: second housing
- 11c: inner housing
- 12: head element
- 13: first thermal rod
- 14: temperature measurement sensor
- 15: second thermal rod
- 16: reference temperature sensor
- 17: connection element
- 18: filling material/insulating material
- 19: coupling element
- 20: spring element
- 22: vessel wall
- 23: adapter element
- 24: tip element
- 25: cap element

## Claims

1. A temperature sensor assembly (10) configured to determine a temperature of a surface of a vessel wall (22), comprising:
- a housing (11) and a head element (12), wherein the head element (12) is removably arranged on the housing (11);
- a first thermal rod (13), comprising a temperature measurement sensor (14); and
- a second thermal rod (15), comprising a reference temperature sensor (16); wherein
- the first thermal rod (13) and the second thermal rod (15) are connected to the head element (12), such that the first thermal rod (13) and/or the second thermal rod (15) are removable from the housing (11) with the head element (12), **characterised in that** the first thermal rod (13)
and the second thermal rod (15) are connected to the housing (11) through a force fitting and a force-fitted structure is given by a bent rod structure, either of the first rod and/or of the second rod.

2. The temperature sensor assembly according to claim 1, wherein the housing (11) and the head element (12) are connected by a force-fitting and/or form-fitting, in particular by a threading.

3. The temperature sensor assembly according to any one of the preceding claims, wherein the temperature assembly (10) is configured to be connected to the vessel wall (22), by a connection element (17), in particular by a clamping means.

4. The temperature sensor assembly according to any one of the preceding claims, wherein a filling material (18) is at least partially arranged inside of the housing (11), wherein the filling material (18) is preferably an insulating material (18).

5. The temperature sensor assembly according to any one of the preceding claims, wherein a coupling element (19), in particular a pinhole plate (19), is arranged to the first thermal rod (13) and/or the second thermal rod (15).

6. The temperature sensor assembly according to any one of the preceding claims, wherein the first thermal rod (13) extends essentially along a middle axis of the housing (11).

7. The temperature sensor assembly according to any one of the preceding claims, wherein the second thermal rod (15) extends at least partially parallel to the first thermal rod (13).

8. The temperature sensor assembly according to any one of the preceding claims, wherein the first thermal rod (13) and/or the second thermal rod (15) are/is bent at least in sections.

9. The temperature sensor assembly according to any one of the preceding claims, wherein the first thermal rod (13) and/or the second thermal rod (15) are/is pressed to the surface of the vessel wall (22) by a spring element (20).

10. The temperature assembly according to any one of the preceding claims, wherein, the first thermal rod (13) and/or the second thermal rod (15) comprises a hollow cylindrical shape, wherein the first thermal rod (13) and the second thermal rod (15) are arranged coaxial to each other.

11. The temperature sensor assembly according to any one of the preceding claims, wherein the first thermal rod (13) is arranged in a first housing (11a) with a first head element and the second thermal rod (15) is arranged in a second housing (11b) with a second head element.

12. A system for determining a temperature of a surface of a vessel wall (22), comprising:
- a temperature sensor assembly (10) according to any one of the claims 1 to 11;
- an analysing device, for determining the surface temperature of the vessel wall (22), wherein the temperature sensor assembly (10) is electrically connected to the analysing device; and
- a connection element (17) configured to connect the temperature sensor assembly (10) to the vessel wall (22); wherein
- the temperature sensor assembly (10) is removable connected to the connection element (17) by an adapter element (23).

## Patentansprüche

1. Eine Temperatursensoranordnung (10), die dazu ausgelegt ist, eine Temperatur einer Oberfläche einer Behälterwand (22) zu ermitteln, aufweisend:
- ein Gehäuse (11) und ein Kopfelement (12), wobei das Kopfelement (12) abnehmbar am Gehäuse (11) angeordnet ist;
- einen ersten Thermostab (13), der einen Temperaturmesssensor (14) aufweist; und
- einen zweiten Thermostab (15), der einen Referenztemperatursensor (16) aufweist; **dadurch gekennzeichnet, dass**
- der erste Thermostab (13) und der zweite Thermostab (15) mit dem Kopfelement (12) verbunden sind, sodass der erste Thermostab (13) und/oder der zweite Thermostab (15) zusammen mit dem Kopfelement (12) entnehmbar sind , wobei der erste Thermostab (13) und der zweite Thermostab (15) über eine Presspassung mit dem Gehäuse (11) verbunden sind und eine Presspassung durch eine gebogene Stabkonstruktion entweder des ersten Stabs und/oder des zweiten Stabs gegeben ist .

2. Temperatursensoranordnung nach Anspruch 1, wobei das Gehäuse (11) und das Kopfelement (12) durch eine Presspassung und/oder eine Formpassung, insbesondere durch ein Gewinde, verbunden sind.

3. Temperatursensoranordnung nach einem der vorstehenden Ansprüche, wobei die Temperatursensoranordnung (10) so ausgebildet ist, dass sie über ein Verbindungselement (17), insbesondere über eine Klemmvorrichtung, mit der Behälterwand (22) verbunden ist.

4. Temperatursensoranordnung nach einem der vorstehenden Ansprüche, wobei im Inneren des Gehäuses (11) zumindest teilweise ein Füllmaterial (18) angeordnet ist, wobei das Füllmaterial (18) vorzugsweise ein Isoliermaterial (18) ist.

5. Temperatursensoranordnung nach einem der vorstehenden Ansprüche, wobei ein Kupplungselement (19), insbesondere eine Lochplatte (19), an dem ersten Thermostab (13) und/oder dem zweiten Thermostab (15) angeordnet ist.

6. Temperatursensoranordnung nach einem der vorstehenden Ansprüche, wobei sich der erste Thermostab (13) im Wesentlichen entlang einer Mittelachse des Gehäuses (11) erstreckt.

7. Temperatursensoranordnung nach einem der vorstehenden Ansprüche, wobei sich der zweite Thermostab (15) zumindest teilweise parallel zum ersten Thermostab (13) erstreckt.

8. Temperatursensoranordnung nach einem der vorstehenden Ansprüche, wobei der erste Thermostab (13) und/oder der zweite Thermostab (15) zumindest abschnittsweise gebogen sind.

9. Temperatursensoranordnung nach einem der vorstehenden Ansprüche, wobei der erste Thermostab (13) und/oder der zweite Thermostab (15) durch ein Federelement (20) an die Oberfläche der Behälterwand (22) gedrückt werden.

10. Temperatursensoranordnung nach einem der vorstehenden Ansprüche, wobei der erste Thermostab (13) und/oder der zweite Thermostab (15) eine hohlzylindrische Form aufweist, wobei der erste Thermostab (13) und der zweite Thermostab (15) koaxial zueinander angeordnet sind.

11. Temperatursensoranordnung nach einem der vorstehenden Ansprüche, wobei der erste Thermostab (13) in einem ersten Gehäuse (11a) mit einem ersten Kopfelement und der zweite Thermostab (15) in einem zweiten Gehäuse (11b) mit einem zweiten Kopfelement angeordnet ist.

12. System zur Bestimmung einer Temperatur einer Oberfläche einer Behälterwand (22), aufweisend:
- eine Temperatursensoranordnung (10) gemäß einem der Ansprüche 1 bis 11;
- eine Auswertevorrichtung zur Bestimmung der Oberflächentemperatur der Behälterwand (22), wobei die Temperatursensoranordnung (10) elektrisch mit der Auswertevorrichtung verbunden ist; und
- ein Verbindungselement (17), das dazu ausgelegt ist, die Temperatursensoranordnung (10) mit der Behälterwand (22) zu verbinden; wobei
- die Temperatursensoranordnung (10) über ein Adapterelement (23) lösbar mit dem Verbindungselement (17) verbunden ist.

## Revendications

1. Ensemble capteur de température (10) conçu pour déterminer une température d'une surface d'une paroi de cuve (22), comprenant :
- un boîtier (11) et un élément de tête (12), l'élément de tête (12) étant disposé de façon amovible sur le boîtier (11) ;
- une première tige thermique (13), comprenant un capteur de mesure de température (14) ; et
- une deuxième tige thermique (15), comprenant un capteur de température de référence (16) ; dans lequel
- la première tige thermique (13) et la deuxième tige thermique (15) sont reliées à l'élément de tête (12), de sorte que la première tige thermique (13) et/ou la deuxième tige thermique (15) peuvent être retirées du boîtier (11) avec l'élément de tête (12), **caractérisé en ce que** la première tige thermique (13) et la deuxième tige thermique (15) sont reliées au boîtier (11) par un ajustement serré et une structure à ajustement serré est fournie par une structure de tige coudée, de la première tige et/ou de la deuxième tige.

2. Ensemble capteur de température selon la revendication 1, dans lequel le boîtier (11) et l'élément de tête (12) sont reliés par un ajustement serré et/ou un ajustement par complémentarité de forme, en particulier par un filetage.

3. Ensemble capteur de température selon l'une quelconque des revendications précédentes, l'ensemble capteur de température (10) étant conçu pour être relié à la paroi de cuve (22) par un élément de liaison (17), en particulier par un moyen de serrage.

4. Ensemble capteur de température selon l'une quelconque des revendications précédentes, dans lequel un matériau de remplissage (18) est au moins partiellement disposé à l'intérieur du boîtier (11), le matériau de remplissage (18) étant de préférence un matériau isolant (18).

5. Ensemble capteur de température selon l'une quelconque des revendications précédentes, dans lequel un élément de couplage (19), en particulier une plaque perforée (19) est disposée sur la première tige thermique (13) et/ou la deuxième tige thermique (15).

6. Ensemble capteur de température selon l'une quelconque des revendications précédentes, dans lequel la première tige thermique (13) s'étend essentiellement le long d'un axe central du boîtier (11).

7. Ensemble capteur de température selon l'une quelconque des revendications précédentes, dans lequel la deuxième tige thermique (15) s'étend au moins partiellement parallèlement à la première tige thermique (13).

8. Ensemble capteur de température selon l'une quelconque des revendications précédentes, dans lequel la première tige thermique (13) et/ou la deuxième tige thermique (15) sont/est coudée(s) au moins par sections.

9. Ensemble capteur de température selon l'une quelconque des revendications précédentes, dans lequel la première tige thermique (13) et/ou la deuxième tige thermique (15) sont/est appuyée(s) contre la surface de la paroi de cuve (22) par un élément à ressort (20).

10. Ensemble capteur de température selon l'une quelconque des revendications précédentes, dans lequel la première tige thermique (13) et/ou la deuxième tige thermique (15) présentent une forme cylindrique creuse, la première tige thermique (13) et la deuxième tige thermique (15) étant disposées coaxialement l'une par rapport à l'autre.

11. Ensemble capteur de température selon l'une quelconque des revendications précédentes, dans lequel la première tige thermique (13) est disposée dans un premier boîtier (11a) avec un premier élément de tête et la deuxième tige thermique (15) est disposée dans un deuxième boîtier (11b) avec un deuxième élément de tête.

12. Système destiné à déterminer une température d'une surface d'une paroi de cuve (22), comprenant :
- un ensemble capteur de température (10) selon l'une quelconque des revendications 1 à 11 ;
- un dispositif d'analyse destiné à déterminer la température de surface de la paroi de cuve (22), l'ensemble capteur de température (10) étant relié électriquement au dispositif d'analyse ; et
- un élément de liaison (17) conçu pour relier l'ensemble capteur de température (10) à la paroi de cuve (22) ; dans lequel
- l'ensemble capteur de température (10) est relié de façon amovible à l'élément de liaison (17) par un élément adaptateur (23).
